# EUROPEAN PATENT SPECIFICATION

(11) **EP 1 002 021 B1**
(45) Date of publication and mention of the grant of the patent: **29.08.2001**
(21) Application number: 98935908.8
(22) Date of filing: 22.07.1998
(51) Int. Cl.: C09B 67/00, B01F 17/00

(54) **DISPERSING AGENTS AND DISPERSIONS MADE THEREFROM**
DISPERGIERMITTEL UND DARAUSHERGESTELLTE DISPERSIONEN
AGENTS DISPERSANTS ET DISPERSIONS PRODUITES A PARTIR DE CEUX-CI

(30) Priority: 25.07.1997 US 53699 P
(43) Date of publication of application: 24.05.2000
(73) Proprietor: ICI AMERICAS INC., Wilmington, Delaware 19850-5391 (US)
(72) Inventor: GREENSHIELDS, James, N., Hockessin, DE 19707 (US); HIBBERT, Peter, G., Newark, DE 19702 (US)
(74) Representative: Humphries, Martyn
(86) International application number: US9815138
(87) International publication number: WO9905225

(56) References cited:
- EP-A- 0 041 688
- EP-A- 0 127 325

## Description

The present invention is directed to dispersing agents and to dispersions of solids such as inorganic and organic pigments in nonaqueous media containing such dispersing agents.

### Background of the Invention

In the ink and paint manufacturing industries, mill-bases for the ink or paint are conventionally prepared by subjecting a pigment and an organic liquid or resin to a grinding operation to disperse the pigment in order to achieve optimum paint and ink performance.

It is important for maximum stability and color in many applications, including liquid colorant dispersants for plastics and oil-based paints and inks, that pigments be well-dispersed in nonaqueous media.

Traditionally, it has been common industry practice to color thermoplastic resins by mixing the solid clear resin with a second solid resin which has been previously colored, the latter resin commonly being referred to as a "color concentrate" or "dry color". Although satisfactory colored articles have been manufactured by this process for several years, many disadvantages remain unaddressed. Coloring plastics by the "dry color" technique involves a preblending step when the pigment is incorporated into the plastic to prepare the concentrate. Also, it is generally not desirable and often not possible to mix different types of thermoplastic resins. It therefore becomes necessary for the resin processor to maintain a large color concentrate inventory, essentially the same color for each of the resins to be produced. The dry color technique has several other manufacturing problems such as long turn-around times between colors. The "liquid color" manufacturing techniques, where the pigment is suspended in a mixture of surfactant and oils and injected directly into the molten plastic in the extruder prior to injection molding or extrusion, attempted to address these difficulties.

Technology advances in liquid color in recent years have addressed the initial feeding and plating out problems of early liquid colorants. For example, these colorants can now be introduced by conventional metering devices such as pumps into the feed screw area of an injection molder or extrusion machine. Such resulting dispersions have consistently produced plastic products of uniform color substantially free of specking and streaking. Also, the liquid nature of these dispersions allows the plastic processor to eliminate a large inventory of various colored plastic resin pellets and to stock only clear resins and relatively small amounts of liquid colorants. Another advantage of these liquid color dispersions is that when the molder wishes to change the color of a product, the procedure is relatively simple. The simplest method involves disconnecting the feed hose to the pump, connecting a clean hose to the pump, and immersing the other end of the clean hose in the new color. The new color will displace and push out the old color. The resin products will show some brief initial bleeding of the colors, but usually only four or five shots in injection molding or a few feet of plastic in extrusion situations need be scrapped before the new color fully appears.

Despite these advances, there remain problems with liquid color dispersions. Efforts continue to attempt to improve the quality of dispersions by increasing the solids content of the liquid color. Most importantly, stability of the color concentrate is often, however, less than desired. The liquid components disadvantageously tend to separate out with time with concomitant inventory and in use problems.

In areas such as inks and paints, the quality of the dispersion is equally important. Traditionally in these industries, the ink or paint manufacturer makes pigment concentrates from either dry pigment or pigment "presses". In either case, there is the need to provide highly concentrated dispersions of the pigment in organic solvent to allow for dilution in either ink or paint formulations. Although some technical problems have been addressed, the most efficient use of the often expensive pigment is still rarely achieved. Better dispersion usually means improved color development which is a measure of the brightness and depth of color of the dispersion. Better dispersion also usually means higher solids loading, which is highly desirable for inventory and for other purposes. Despite various efforts, these improved dispersions remain to be achieved.

There therefore continues to remain an unfulfilled need in the art for pigment dispersions having improved stability and color properties.

### Summary of the Invention

The present invention advantageously and surprisingly fulfills the above-described needs. In accordance with the present invention, dispersing agents which are particularly and surprisingly effective for dispersing a solid in a nonaqueous medium have been advantageously discovered. The present invention provides dispersing agents which are reaction products of alcohol- containing aromatic moieties with an ester or polyester yielding moieties. Particularly desirable properties of dispersions, such as stability and color improvement, can be advantageously achieved by incorporating into the dispersions, a dispersing agent of the present invention of the formula:

A(CH2)ₙ (OCHRCHR')ₘ O (COBO)_{z} R²

wherein
A is an aromatic, or polynuclear aromatic monovalent group, which has from 1 to 3 rings;
n = 0-2;
R and R' independently of one another are each H or CH₃;
m = 0-100;
B is a linear or branched, saturated or unsaturated divalent hydrocarbon group;
z = 1-50;
R² is H or COR³; and
R³ is a linear or branched monovalent hydrocarbon group having 4 to 20 carbon atoms.

The dispersing agents of the present invention have been found to possess excellent dispersing properties for liquid color applications and ink and paint formulations.

The present invention is advantageously and particularly useful for providing nonaqueous dispersions of a solid, which solid is an organic or inorganic pigment in liquid color and paint and ink applications.

Such dispersions are thus another aspect of the present invention.

The solid dispersed by way of the present invention may be any inorganic or organic compound which is substantially insoluble in the nonaqueous dispersion medium.

These and other features, aspects, and advantages of the present invention will become better understood with reference to the following description and appended claims.

### Detailed Description of the Invention

As indicated above, the nonaqueous dispersions of the present invention contain a dispersing agent and a solid. Each of these is described separately below.

### Dispersing Agent

The dispersing agents of the present invention are reaction products of an alcohol - containing aromatic moiety with an ester or polyester yielding moiety encompassed by the above formula.

The aromatic moiety A, of the above formula can be typically chosen from the group of aromatics having from 1 to 3 rings. Particularly suitable are phenyl, naphthyl and other polynuclear aromatics and derivatives thereof, such as radicals derived from phenylbenzene, phenoxybenzene, diphenylether, diphenylsulfone, and diphenylsulfide. Additional suitable derivatives may include oxygen, sulfur and nitrogen atoms such as carbazole, benzofuran, quinoline, and benzothiazine. Additionally, substituted derivatives of the above such as 2- and 4- methyl, nitro and halogenated products are also within the scope of the present invention.

The dispersing agents of the present invention can further include an alkylene oxide chain composed of residues of ethylene oxide and/or propylene oxide. The chain may be a homopolymer chain or a block or random copolymer chain containing the two oxide residues, usually including at least one ethylene oxide residue.

The alkylene oxide chain is defined as the group (OCHRCHR')ₘ in the above formula. The chain length of this group, i.e., the value of the parameterₘ, can be readily selected to provide the desired properties for the compound. The longer the chain and the higher the proportion of ethylene oxide residues, then the more hydrophilic the compound is. Typically, where the alkylene oxide chain is an ethylene oxide chain, ₘ generally ranges from about 1 to about 100, and particularly from about 1 to about 10. Where it is a propylene oxide chain, ₘ generally ranges from about 1 to about 100, and preferably from about 1 to about 10. Where the chain is a block or random copolymer of ethylene and propylene oxide residues, the chain length chosen will typically correspond to the above ranges, but numerically according to the proportion of ethylene and propylene oxide residues in the chain. Generally, where copolymeric chains of ethylene and propylene oxide units are used, the molar proportion of ethylene oxide units typically can be at least about 50%, more typically at least about 70% of the chains. Numerical values of the repeat length of the alkylene oxide chain are average values and can be non-integral. Where integral values are given, they will usually be approximate values.

(COBO) of the formula for the dispersing agents can suitably be derived from either a hydroxycarboxylic acid or a cyclic ester.

An example of a suitable cyclic ester for use in the present invention is caprolactone.

With regard to the hydroxycarboxylic acid utilized, the acid can suitably range from about 4 to about 20 carbon atoms. The acid can be saturated or unsaturated.

As non-limiting examples of such hydroxycarboxylic acids, these may include ricinolinic acid, ricinoleic acid, a mixture of 9- and 10-hydroxystearic acids and preferably 12-hydroxystearic acid.

Particularly suitable dispersing agents of the present invention are the reaction products of β-(2-hydroxyethoxy) naphthalene, 12-hydroxystearic acid and stearic acid. The number of repeat ester units (z) will be determined by the relative amounts of β-(2-hydroxyethoxy) naphthalene, steric acid and 12-hydroxystearic acid used. Commerically available 12-hydroxystearic acid typically contains about 15% by weight of stearic acid, so that it is particularly convenient to use this ratio to avoid any further addition of stearic acid. The amount of β-(2-hydroxyethoxy) naphthalene used preferably is a molar ratio which approximates to that of the stearic acid in the commerical 12-hydroxystearic acid used. Amounts higher and lower that this can also be used, if desired or considered suitable.

With regard to R³ of COR³, R³ can be C₄ to C₂₀ branched or linear hydrocarbon. The moiety COR³ is derived from a fatty acid which does not contain a free hydroxyl group. This molecule may be added in an amount calculated to determine the value of Z by chain termination.

### Methods of Synthesis

The dispersing agents of the present invention can be synthesized by reacting the alcohol portion of the molecule, for example β-(2-hydroxyethoxy) naphthalene, with the hydroxycarboxylic acid, for example 12-hydroxystearic acid and the non-hydroxycarboxylic acid, for example stearic acid, at a temperature and for a time sufficient to obtain a reaction product having an acid number ranging from about 5 to about 30, particularly about 10 mg KOH/g. The reaction is typically carried out at a temperature ranging from about 190 to about 225°C for from about 3 hours to about 18 hours. The reaction can be carried out in the presence of a typical esterification catalyst. An example of such catalyst is tetrabutyl titanate. The water formed in the esterification reaction can be removed from the reaction medium. This can be conveniently carried out by passing a stream of nitrogen over the reaction mixture. Alternatively, one can carry out the reaction in the presence of a solvent, such as toluene or xylene, and distill off the water as it is formed as an azeotrope. The reaction product can be isolated by conventional manner, however, when the reaction is carried out in the presence of an organic solvent, whose presence in the subsequent dispersion would not be harmful, the dispersing agent of the present invention can be readily used without requiring isolation.

The reaction may also be conveniently carried out in two stages, where the first step is reaction of the hydroxy carboxylic acid with the non-hydroxy carboxylic acid to give a complex polyester, which in a second stage is reacted with the alcohol compound. The reaction conditions and catalysts used for the single stage reaction are also suitable for the two steps of the two stage reaction.

Another aspect of the present invention is directed to a dispersion of a solid in an organic or nonaqueous medium containing a dispersing agent as hereinbefore defined.

The dispersions of the present invention can be obtained by any of the conventional and well-known methods of preparing dispersions. Thus, the desired solid, the organic medium or liquid, and the dispersing agent may be mixed in any order. The mixture can then be subjected to a mechanical treatment to reduce the particle size of the solid, for example, by ball milling, bead milling, gravel milling, or plastic milling until the dispersion is formed.

It is well-known in the art that the amount of the dispersing agent utilized is typically dependent on the particle size of the solid. Generally, from about 1 to about 50% by weight of dispersant on solid is preferred, more preferably from about 10 to about 40%, based on the weight of the solid. The dispersion preferably contains from about 20% to about 75% by weight of the solid based on the total weight of the dispersion.

### Solid

The solid dispersed by way of the present invention may be any inorganic or organic compound which is substantially insoluble in the nonaqueous liquid medium at the temperature utilized and which is capable of comminution into a finely divided form. The invention is particularly directed to when the solid is an organic or inorganic pigment, and dispersions containing such solids are also an aspect of the invention. The term pigment should be understood to include both inorganic and organic pigments, as well as lakes and toners.

As examples of organic pigments, these include azo, thionindigo, anthraquinone, anthanthrone and isodibenzanthrone pigments, vat dye pigments, triphendioxazine pigments, phthalocyanine pigments, for example, copper phthalocyanine, its nuclear chlorinated derivatives, and copper tetraphenyl or octaphenyl phthalocyanine, as well as other heterocyclic pigments, for example, linear quinacridone.

A synergist or fluidizing agent may additionally be included in dispersions of organic pigments. These are well-known in the art.

Such synergists are typically salts formed by the reaction between an amine or a quaternary ammonium salt and a colored acid.

A particularly suitable synergist is a substituted ammonium salt of a colored acid wherein there are between 16 and 60 carbon atoms contained in at least 3 chains attached to the nitrogen atom of the substituted ammonium ion.

The synergists or fluidizing agents which can be utilized in the present invention preferably contain at least four organic chains attached to the nitrogen atom of each substituted ammonium ion, and these chains preferably contain, in total, at least 19 carbon atoms, and more especially between 25 and 40 carbon atoms. It is further preferred that at least one and more preferably two of the chains are alkyl or alkenyl groups containing at least 8 and preferably at least 12 carbon atoms, especially those groups containing between 12 and 30 carbon atoms.

The colored acid may be any pigment or dyestuff which contains an acidic group and if desired can be the solid that is to be dispersed, where that solid already contains an acidic group, or where the solid to be dispersed does not contain an acidic group, can be a solid which has been modified by the incorporation of one or more acidic groups. However, it is preferred that the colored acids are compounds of the azo, anthraquinone or phthalocyanine series which contain acid radicals such as -SO₃H and -COOH, which will react with amines or with quaternary ammonium salts to form substituted ammonium salts of the colored acid.

It is preferred that the colored acids are polycyclic aromatics, especially of the phthalocyanine series and, in particular, the mono- and di-sulphonic acids of copper phthalocyanine or mixtures of these.

As suitable examples of the amines and substituted ammonium salts that may be used to form the synergists, these include tertiary amines and quaternary substituted ammonium salts such as N,N dimethyloctadecylamine, cetyltrimethylammonium bromide, didodecyldimethylammonium chloride and dioctadecyldimethylammonium chloride.

Alternatively, the amines or quaternary ammonium salts may contain polymer chains such as the amines and amine salts described in U.K. Patent Specification No. 1,373,660, especially the polyester amine adducts formed by the reaction between alkylamines and polyhydroxy stearic acid.

The amines and substituted ammonium salts may be cyclized wherein at least two of the organic chains are linked to form a ring containing the nitrogen atom which will form the charge center of the substituted ammonium ion. The ring or rings so formed may be aliphatic rings such as piperidine or aromatic rings such as pyridine with N-cetyl pyridinium salts and N-cetylpiperidine as examples.

One or more of the organic chains attached to the N-atom of the amine or substituted ammonium ion may be substituted by aromatic groups such as phenyl and substituted phenyl radicals which are free from acidic groups, e.g., benzyldimethyloctadecylammonium chloride. Alternatively, one or more of the organic chains may contain other non-acidic substituents such as hydroxy groups, e.g., octadecylbis-(2-hydroxyethyl)amine, amino or substituted amino, e.g., 3-(N-octadecyl-N-hydroxyethylamino)propyl-N'N'bis(2-hydroxyethyl)amine, thus forming polyamines to one of the N-atoms of which is attached at least 3 organic chains containing a total of at least 16 carbon atoms.

As examples of the colored acids which may be used to form the synergists, these include copper phthalocyanine monosulphonic acid, copper phthalocyanine disulphonic acids and mixtures of these especially one having an average of about 1.3 sulphonic acid groups per copper phthalocyanine molecule, copper phthalocyanine trisulphonic acid, azo and anthraquinone dyestuffs containing sulphonic acid groups and/or carboxylic acid groups such as the dyestuff formed by coupling tetrazotized benzidine 2,2'disulphonic acid with two molecular proportions of phenyl methylpyrazolone or by coupling carbonyl J Acid with two molecular proportions of diazotized 4-aminoazobenzene 3,4'disulphonic acid, sodium-1-amino 4-anilino anthraquinone-2-sulphonate, C.I. Acid Blue 1 (C.I. 42045), C.I. Acid Blue 59 (C.I. 50315) C.I. Acid Blue 90 (C.I. 42655) and C.I. Acid Orange 33 (C.I. 24770).

The above mentioned colored acids are in no way intended to limit, but merely to give examples of the wide range of colored acids suitable for use in the preparation of the synergists which can be utilized in the practice of the present invention.

A particularly suitable synergist for practice in the present invention is a quaternary salt of a sulfonated derivative of copper phthalocyanine.

The amount of the synergist is such as corresponds to between about 1% and 50% by weight based on the weight of the solid, the preferred ranges being between about 5% and 30% and, more particularly, between about 10% and 20%, respectively.

Methods of making the synergists which can be utilized in the present invention are described in U.S. Patent 4,057,436, which is incorporated herein by reference.

As suitable examples of inorganic pigments for use in the present invention, these may include chrome pigments including the chromates of lead, zinc, barium and calcium and various mixtures and modifications, such as are commercially available as pigments of greenish-yellow to red shades under the names primrose, lemon, middle orange, scarlet and red chromes. Modified chrome pigments may contain, for example, sulphate radicals and/or additional metals such as aluminum, molybdenum and tin. Further examples of inorganic pigments are carbon black, titanium dioxide, zinc oxide, Prussian blue and its mixtures with chrome yellows which are known as Brunswick Greens or chrome greens, cadmium sulphide and sulphoselenide, iron oxides, vermilion and ultramarine. Titanium dioxide is particularly preferred in the practice of the present invention. These and various other pigments suitable for use in the present invention are described in Volume 2 of "Colour Index 3rd Edition," published jointly by the Society of Dyers and Colourists and the American Association of Textile Chemists and Colourists, under the heading of "Pigments" and in subsequent authorized amendments thereto.

The term "lake" denotes a water-insoluble metal salt or complex of an organic dyestuff which has been precipitated on a water-insoluble inorganic substrate such as alumina.

The term "toner" denotes a water-insoluble metal salt or complex, in particular a calcium or barium salt or complex thereof, or a soluble or sparingly-soluble organic dyestuff, in particular an azo dyestuff, which has optionally been prepared in the presence of an extender such as rosin.

As specific examples of suitable lakes and toners for use in the present invention, these may include the barium toner of 1-(2'-sulpho-4'-methyl- 5'-chlorophenylazo)- 2-hydroxy-3-naphthoic acid, the nickel complex of a 3-(4'-chlorophenylazo)- quinoline-2:4-diol, the rosinated barium toner of 1- (2'- sulpho- 4'- chloro- 5'- methylphenylazo)-2-naphthol, the aluminum lake of 1:4-dihydroxyanthraquinone-2-sulphonic acid and a rosinated calcium toner of 1-(2'-sulpho-4'-methylphenylazo)-2-hydroxy-3- naphthoic acid.

Especially suitable pigments for use in the dispersions of the present invention are rubine toners, benzidine yellows and carbon blacks such as are used in publication gravure printing and newsprint ink.

As examples of dyestuffs, these may include water-insoluble dyestuffs such as disperse dyestuffs and water-soluble dyestuffs such as basic, acid and direct dyestuffs. The dyestuffs may be, for example, azo dyestuffs, such as monoazo and disazo dyestuffs and metallized derivatives thereof, anthraquinone, nitro, phthalocyanine, methine, styryl, naphthoperinone, quinophthalone, diarylmethane, triarylmethane, xanthine, azine, oxazine and thiazine dyestuffs. If desired, the dyestuffs can be reactive dyestuffs which contain groups capable of forming covalent bonds with textile materials.

With regard to the nonaqueous medium, any organic liquid may be used in the dispersions of the present invention. Hydrocarbons are especially preferred. As examples of such liquids, these may include aromatic hydrocarbons such as benzene, toluene, xylene, aliphatic and cycloaliphatic hydrocarbons such as petroleum fractions, white spirit and cyclohexane, and high boiling mineral oils such as spindle oil. Alternative organic liquids include halogen-substituted hydrocarbons such as chlorobenzene, trichloroethylene, perchloroethylene, 1,1,1-trichloroethane, methylene dichloride, chloroform, 1,1,2-trichloro-1,2,2-trifluoroethane, carbon tetrachloride, tetrachloroethane or dibromoethylene and mixtures of these compounds, esters such butyl acetate and heat bodied linseed oils used as lithographic varnish media and ketones such as methylethylketone, methylisobutyl ketone and cyclohexanone. Mixtures of such solvents may be used. The solvents may contain other materials in solution, for example, the alkyd, nitrocellulose, acrylic, urea/formaldehyde, melamine/formaldehyde or other resins used in paint media or zinc/calcium rosinates used in gravure ink media. Especially preferred solvents are a petroleum fraction with a boiling point in the range of 100 - 200°C, toluene, xylene and spindle oil.

The nonaqueous medium may also include a nonionic surfactant or combinations of nonionic surfactants such as sorbitan esters and ethoxylated sorbitan esters, if desired.

The dispersions of the present invention are especially fluid. The dispersions generally contain the solid in finely divided and usually deflocculated form, and can be advantageously used for any purpose for which dispersions of these particular solids are conventionally used. Thus, the pigment dispersions are suitable for the coloring of plastic parts and the manufacturing of printing inks, particularly publication gravure and newsprint inks, by incorporating the dispersions with the other components conventionally used in the manufacture of plastic products and such inks. These dispersions are also suitable for use in the manufacture of paints, for which purpose the dispersions are incorporated into conventional and well-known alkyd or other resins utilized in paints.

The dyestuff dispersions are useful in the preparation of textile printing inks or solvent dyeing systems and, particularly, where the dyestuff is a sublimable disperse dyestuff, transfer printing. Inks and paints containing such dispersions are further features of the present invention.

The following examples are provided for purposes of illustrating the invention and should not be construed in any manner whatsoever as limiting the scope of the present invention. All parts and percentages are by weight unless otherwise stated.

In the Examples, the following procedures and materials were employed:

### Synthesis of Dispersants

a) Dispersant A
   12- Hydroxystearic acid (Caschem, 380g) tetrabutyl titanate (1.0g) and β-(2-hydroxyethoxy)naphthalene (35.7g) were heated over 18 hours from 190-220°C for 18 hours in a stream of nitrogen until the acid number of the product was approximately 10.
b) Dispersant B
   12-Hydroxystearic acid (475g) was reacted in the same way as above for Dispersant A with a reaction product of 10 moles of ethylene oxide and beta naphthol (139g) and tetrabutyl titanate (1.4ml).
c) Dispersant C
   12-Hydroxystearic acid (380g) was reacted in the same way with a reaction product of 4 moles of ethylene oxide and phenol (51.1g), and tetrabutyl titanate (1ml).
d) Dispersant D
   The reaction product of beta-naphthol and 10 moles of ethylene oxide (30.0g) was mixed with tetrabutyl titanate (0.15ml) and caprolactone (75g). The mixture was stirred and heated in a stream of nitrogen to 200°C for 3-5 hours. At 190°C, an exotherm to 225°C occurred after which NMR indicated virtually complete reaction.
e) Dispersant E
   Ricinolinic acid (380g), B-(2-hydroxyethoxy)naphthalene (35.7g) and tetrabutyl titanate (1g) were heated together at 190-225°C for 10 hours until the acid number of the mixture was approximately 10.

### Preparation of mill bases and coatings

Typically, a mill base color concentrate was first prepared and then diluted (let down) in a white tint base. A coating of the resulting mixture (a draw down) was then made, and the intensity of the color determined by standard spectrophotometric means. In this procedure, it is customary to set the color of a typical industry standard at 100. Values of >100 therefore represented improved colors over the industry standard.

### Example 1

The following example demonstrated the improved dispersion capabilities of a dispersing agent of the present invention with titanium dioxide.

A typical dispersion used in the color concentrate industry contains titanium dioxide (70g), mineral oil (15g), along with mixtures of surfactants such as ethoxylated sorbitol and ethoxylated sorbitol esters such as SPAN® and TWEEN® surfactants, which are available from Imperial Chemical Industries (ICI) (15g total). Addition of dispersant A to this dispersion lowered viscosity, indicating improved dispersion, and improved the stability of the dispersion as indicated in Table 1. The viscosities were measured on a Haake Rotorviscometer at a shear rate of 20 sec.⁻¹. The stability value was determined by a visual observation of time to separation of the dispersion.

**Table 1.**

| Viscosity and stability data on titanium dioxide formulations | | |
|---|---|---|
| | Viscosity | Stability |
| SPAN® 85 (15g) | 17,550 | 10 |
| TWEEN® 85 (15g) | 24,900 | 10 |
| SPANS 85 (7.5g) + TWEEN®85 (7.5g) | 13,900 | 13 |
| SPAN® 85 (6.25g) +TWEEN® 85 (6.25g) +Dispersant A (2.5g) | 2,953 | >45 |

### Example 2

The following example demonstrated improved dispersion capabilities achieved by the dispersing agents of the present invention with copper phthalocyanine, an organic pigment.

Copper phthalocyanine (15g), toluene (37.5g), Solsperse® 5000, a synergist from Zeneca, Inc. (1.8g), and dispersant A (2.4g) were shaken in a Red Devil paint shaker with ceramic beads (70ml) for one hour. Twenty parts of this mill base was mixed with eighty parts of a standard white tint base, and drawndowns were made on standard black and white Lanetta cards. After being allowed to dry, the color was measured on a Byk Gardner TS II Spectrophotometer and compared with a commercial control, which was based on Solsperse® 5000/Solsperse® 13940 from Zeneca, Inc.

A dispersion containing dispersant B was prepared in the same manner as above.
Data obtained from such dispersions are shown in Table 2.

**Table 2.**

| Color development of coatings | |
|---|---|
| Color Development | Dispersant |
| 100 | Synergyst + commercial dispersant control |
| 85 | Pigment only |
| 85 | Synergyst only |
| 103 | Synergyst + dispersant B |
| 110 | Synergyst + dispersant A |

The color development numbers of >100 indicated the improved performance obtained with dispersants A and B of the present invention over that of the commercial control described above.

Although the present invention has been described in considerable detail with reference to various suitable embodiments, modifications of these embodiments which can be readily carried out are to be understood as falling within the scope of the present invention.

## Claims

1. A dispersing agent which is of the formula:
A(CH₂)ₙ (OCHRCHR¹)ₘO (COBO)_{z} R²
wherein
A is an aromatic or polynuclear aromatic monovalent group of from 1 to 3 rings;
n = 0-2;
OCHRCHR¹ is an alkylene oxide chain;
R and R¹ independently of one another are each H or CH₃;
m = 0-100;
B is a linear or branched, saturated or unsaturated divalent hydrocarbon group;
z = 1 - 50;
R² is H or COR³ ; and
R³ is a linear or branched monovalent hydrocarbon group.

2. A dispersing agent as claimed in claim 1 wherein the aromatic or polyaromatic monovalent group is phenyl, naphthyl or a derivative thereof, preferably β-(2-hydroxyethoxy) naphthalene

3. A dispersing agent as claimed in claim 1 or claim 2 wherein the alkylene oxide chain includes residues of ethylene oxide and/or propylene oxide.

4. A dispersing agent as claimed in any one of claims 1 to 3 in which m is from 1 to 10.

5. A dispersing agent as claimed in any one of claims 1 to 4 wherein (COBO) is a residue of a hydroxycarboxylic acid or a cyclic ester.

6. A dispersing agent as claimed in claim 5 wherein the hydroxycarboxylic add is ricinolinic acid, ricinoleic acid, a mixture of 9- and 10-hydroxystearic acid or, and preferably, 12-hydroxystearic acid.

7. A dispersing agent as claimed in any one of claims 1 to 6 wherein -COR³ is a residue of a fatty acid which does not contain a free hydroxyl group.

8. A dispersion in a non-aqueous medium which comprises a solid and a dispersing agent as claimed in any one of claims 1 to 7.

9. A dispersion as claimed in claim 8 wherein the solid is an inorganic or organic compound which is substantially insoluble in the non-aqueous medium.

10. The use of a dispersing agent as claimed in any one of claims 1 to 7 as a dispersion agent for solids in non-aqueous liquids.

11. A method of making a dispersing agent as claimed in any one of claims 1 to 7 which comprises reacting the alcohol portion of the molecule with the hydroxycarboxylic acid and the non-hydroxycarboxylic acid at a temperature and for a time sufficient to obtain a reaction product having an acid number of from 5 to 30, particularly 10 mg(KOH).g⁻¹.

## Patentansprüche

1. Dispergiermittel mit der folgenden Formel:
A(CH₂)ₙ (OCHRCHR¹)ₘ O(COBO)_{z} R²
worin
A eine aromatische oder polynukleare aromatische monovalente Gruppe mit 1 bis 3 Ringen ist;
n = 0-2;
OCHRCHR¹ eine Alkylenoxidkette ist;
R und R¹ unabhängig voneinander jeweils H oder CH₃ sind;
m = 0-100;
B eine lineare oder verzweigte, gesättigte oder ungesättigte zweiwertige Kohlenwasserstoffgruppe ist;
z = 1-50;
R² H oder COR³ ist; und
R³ eine lineare oder verzweigte monovalente
Kohlenwasserstoffgruppe ist.

2. Dispergiermittel gemäß Anspruch 1, wobei die aromatische oder polyaromatische einwertige Gruppe Phenyl, Naphthyl oder ein Derivat hiervon, vorzugsweise β-(2-Hydroxyethoxy)naphthalen ist.

3. Dispergiermittel gemäß Anspruch 1 oder Anspruch 2, wobei die Alkylenoxidkette Ethylenoxid und/oder Propylenoxidgruppen einschließt.

4. Dispergiermittel gemäß einem der Ansprüche 1 bis 3, in welchem m = 1-10 ist.

5. Dispergiermittel gemäß einem der Ansprüche 1 bis 4, wobei (COBO) eine Hydroxycarbonsäuregruppe oder eine zyklische Estergruppe ist.

6. Dispergiermittel gemäß Anspruch 5, wobei die Hydroxycarbonsäure Ricinolinsäure, Ricinoleinsäure, eine Mischung von 9- und 10-Hydroxystearinsäure oder, und vorzugsweise, 12-Hydroxystearinsäure ist.

7. Dispergiermittel gemäß einem der Ansprüche 1 bis 6, wobei -COR³ eine Gruppe einer Fettsäure ist, welche keine freie Hydroxylgruppe enthält.

8. Dispersion in einem nicht wässrigen Medium, welche einen Feststoff und ein Dispergiermittel gemäß einem der Ansprüche 1 bis 7 umfasst.

9. Dispersion gemäß Anspruch 8, wobei der Feststoff eine anorganische oder organische Verbindung ist, welche in dem nichtwässrigen Medium im wesentlichen unlöslich ist.

10. Verwendung eines Dispergiermittels gemäß einem der Ansprüche 1 bis 7 als ein Dispergiermittel für Feststoffe in nichtwässrigen Flüssigkeiten.

11. Verfahren zur Herstellung eines Dispergiermittels gemäß einem der Ansprüche 1 bis 7, welches umfasst: Umsetzung des Alkoholanteils des Moleküls mit der Hydroxycarbonsäure und der nicht-Hydroxycarbonsäure bei einer Temperatur und für eine Zeit, die zur Gewinnung eines Reaktionsprodukt mit einer Säurezahl von 5 bis 30, insbesondere 10 mg(KOH)g⁻¹ ausreichend ist.

## Revendications

1. Agent dispersant, qui est de formule :
A(CH₂)ₙ(OCHRCHR¹)ₘO(COBO)_{z}R²
dans laquelle :
A est un groupe monovalent aromatique ou aromatique polynucléaire de 1 à 3 cycles ;
n = 0 à 2 ;
OCHRCHR¹ est une chaîne d'oxyde d'alkylène ;
R et R¹ sont chacun indépendamment l'un de l'autre, H ou CH₃;
m = 0 à 100 ;
B est un groupe hydrocarboné divalent saturé ou insaturé, à chaîne droite ou ramifiée ;
z = 1 à 50 ;
R² est H ou COR₃ ; et
R³ est un groupe hydrocarboné monovalent à chaîne droite ou ramifiée.

2. Agent dispersant suivant la revendication 1, dans lequel le groupe monovalent aromatique ou polyaromatique est un groupe phényle, naphtyle, ou un dérivé de ceux-ci, de préférence un groupe β-(2-hydroxyéthoxy)naphtalène.

3. Agent dispersant suivant les revendications 1 ou 2, dans lequel la chaîne d'oxyde d'alkylène comprend des résidus d'oxyde d'éthylène et/ou d'oxyde de propylène.

4. Agent dispersant suivant l'une quelconque des revendications 1 à 3, dans lequel m est de 1 à 10.

5. Agent dispersant suivant l'une quelconque des revendications 1 à 4, dans lequel COBO est un résidu d'un acide hydroxy carboxylique ou d'un ester cyclique.

6. Agent dispersant suivant la revendication 5, dans lequel l'acide hydroxy carboxylique est l'acide ricinolinique, l'acide ricinoléique, un mélange d'acides 9- et 10-hydroxystéariques ou, et de préférence, l'acide 12-hydroxystéarique.

7. Agent dispersant suivant l'une quelconque des revendications 1 à 6, dans lequel -COR³ est un résidu d'un acide gras qui ne contient pas de groupe hydroxy libre.

8. Dispersion dans un milieu non aqueux qui comprend un solide et un agent dispersant suivant l'une quelconque des revendications 1 à 7.

9. Dispersion suivant la revendication 8, dans laquelle le solide est un composé inorganique ou organique qui est pratiquement insoluble dans le milieu non aqueux.

10. Utilisation d'un agent dispersant suivant l'une quelconque des revendications 1 à 7, en tant qu'agent de dispersion pour des solides dans des liquides non aqueux.

11. Procédé de préparation d'un agent dispersant suivant l'une quelconque des revendications 1 à 7, qui comprend la réaction de la partie alcool de la molécule avec l'acide hydroxy carboxylique et l'acide non hydroxy carboxylique, à une température et pendant une période de temps suffisantes pour obtenir un produit réactionnel ayant un indice d'acide de 5 à 30, en particulier de 10 mg de KOH/g.
